Europäisches Patentamt

European Patent Office

Office européen des brevets

(11) Veröffentlichungsnummer : **0 207 238**
**B1**

(12) **EUROPÄISCHE PATENTSCHRIFT**

(45) Veröffentlichungstag der Patentschrift :
19.07.89

(21) Anmeldenummer : 86105257.9

(22) Anmeldetag : 16.04.86

(51) Int. Cl.⁴ : **G 01 F 23/22**, G 01 F 23/04 //
**F01M11/12**

(54) Einrichtung zur elektrischen Ölfüllstandsüberwachung insbesondere in Kraftfahrzeug-Verbrennungsmotoren.

(30) Priorität : 05.06.85 DE 3520125

(43) Veröffentlichungstag der Anmeldung :
07.01.87 Patentblatt 87/02

(45) Bekanntmachung des Hinweises auf die Patenterteilung : 19.07.89 Patentblatt 89/29

(84) Benannte Vertragsstaaten :
**DE FR GB IT NL SE**

(56) Entgegenhaltungen :
**DE–A– 3 327 047**
**DE–B– 2 140 963**
**DE–B– 2 718 295**
**GB–A– 1 254 207**
**US–A– 4 476 714**

(73) Patentinhaber : **VDO Adolf Schindling AG**
**Gräfstrasse 103**
**D-6000 Frankfurt/Main 90 (DE)**

(72) Erfinder : **Benda, Franz**
**Massbornstrasse 23**
**D-6000 Frankfurt/Main 56 (DE)**

(74) Vertreter : **Klein, Thomas, Dipl.-Ing. (FH)**
**Sodener Strasse 9 Postfach 6140**
**D-6231 Schwalbach a. Ts. (DE)**

Jouve, 18, rue St-Denis, 75001 Paris, France

## Beschreibung

Die Erfindung betrifft eine Einrichtung zur elektrischen Ölfüllstandsüberwachung insbesondere in Kraftfahrzeug-Verbrennungsmotoren nach dem Oberbegriff des Anspruchs 1.

Bei derartigen bekannten Einrichtungen wird als temperaturabhängiges Widerstandselement z. B. ein Widerstand mit positivem Temperaturkoeffizienten (PTC) benutzt, der in Perlenform in Glas gekapselt sein kann. Über Zuleitungen kann das temperaturabhängige Widerstandselement an eine Auswertungsschaltungsanordnung mit Stromquelle angeschlossen werden, mit der die an dem Widerstandselement herrschende Temperatur in ein elektrisches Signal umgewandelt werden kann. Dabei wird ausgenutzt, daß das Widerstandselement, je nachdem, wie weit es in ein besser wärmeleitendes Medium — Öl — als Luft eintaucht, mehr oder weniger Wärme an seine Umgebung abgibt, die durch den durch das Widerstandselement fließenden Strom erzeugt wird. Wenn beispielsweise das Widerstandselement in Öl eintaucht, erfolgt eine weitgehende Wärmeabgabe und die Temperatur des Widerstandselements ist entsprechend niedrig. Dem entspricht ein verhältnismäßig niedriger Widerstand und kleiner Spannungsabfall an dem Widerstandselement. Liegt hingegen das Widerstandselement in Luft, so erfolgt nur eine geringe Wärmeabgabe, und das Widerstandselement wird auf eine vergleichsweise hohe Temperatur aufgeheizt. Wegen des dann höheren Widerstandswerts des Widerstandselements fällt an diesem eine relativ große Spannung ab, die ausgewertet werden kann. Die Auswertung des Widerstandswerts des temperaturabhängigen Widerstandselements kann mit einer Brückenschaltung mit nachgeschalteten Verstärkerstufen erfolgen. - Das temperaturabhängige Widerstandselement kann zur elektrischen Ölfüllstandsüberwachung in einem hohl ausgebildeten Ölmeßstab untergebracht sein, der gegebenenfalls noch ein weiteres temperaturabhängiges Widerstandselement, insbesondere mit negativem Temperaturkoeffizienten, zur Nulltemperaturüberwachung aufnimmt.

Zur beschriebenen Funktion des temperaturabhängigen Widerstandselements bei der Füllstandsüberwachung kommt es für einen großen Meßeffekt bzw. zum Erzielen deutlich unterschiedlich elektrischer Signale für das in das Öl eingetauchte oder aber ausgetauchte Widerstandselement darauf an, daß dessen Wärmeabgabe an die Umgebung im ausgetauchten Zustand klein ist, jedoch in eingetauchtem Zustand relativ groß ist.

Aus der DE-A-33 27 047 ist eine Füllstandsüberwachungseinrichtung bekannt, bei der ein Fühler von einer dickwandigen, großvolumigen Hülse aus gut wärmeleitendem Material umgeben ist. Diese Hülse leitet die Wärme von einem sie umschliessenden Außenmantel zum Fühler. Das große Volumen der Hülse bedingt eine träge Reaktion bei Veränderungen des Füllstands.

Aus der US-A-44 76 714 ist eine Füllstandsüberwachungseinrichtung bekannt, die einen Ölmeßstab mit Öffnungen aufweist, in denen temperaturabhängige Widerstandselemente angeordnet sind.

Der vorliegenden Erfindung liegt daher die Aufgabe zugrunde, den Meßeffekt zum Erzielen deutlich unterschiedlicher elektrischer Signale im eingetauchten bzw. ausgetauchten Zustand des temperaturabhängigen Widerstandselements in wenig aufwendiger Weise zu verbessern.

Diese Aufgabe wird durch die Anordnung des Widerstandselements mit den Merkmalen des Anspruchs 1 gelöst.

Dadurch, daß das Widerstandselement an einem in den Hohlraum des Ölpeilstabs passendes Plättchen aus einem Material hoher Wärmeleitfähigkeit unter Bildung einer gut wärmeleitenden Verbindung angebracht ist, wird erreicht, daß die Wärme des Widerstandselements gut an das umgebende Öl im eingetauchten Zustand abgegeben wird. Es tritt also eine deutliche relative Abkühlung des Widerstandselements gegenüber dem ausgetauchten Zustand ein. Zu diesem großen Meßeffekt trägt bei, daß die Zuleitungen aus einem elektrischen Leiter schlechter Wärmeleitfähigkeit bestehen, über die somit insbesondere im ausgetauchten Zustand des Widerstandselements nur wenig Wärme abgeleitet wird. Das Widerstandelement kann also im ausgetauchten Zustand mit verhältnismäßig geringer elektrischer Energie auf eine recht hohe Temperatur aufgeheizt werden und hat damit einen relativ hohen Widerstand, der beim Eintauchen des Widerstandselements in Öl deutlich absinkt.

Dabei ist vorteilhaft, daß zum Erreichen des Meßeffekts eine relativ geringe elektrische Energie zur Beheizung des Widerstandselements benötigt wird. Es können temperaturabhängige Widerstandselemente geringer Leistungsaufnahme verwendet werden, die dementsprechend klein sind und deren Einbau in den begrenzten Hohlraum eines Ölmeßstabs somit unproblematisch ist. - Infolge des großen Meßeffekts sind die Anforderungen an den Verstärker, der die unterschiedlichen Spannungsabfälle an dem elektrischen Widerstandselement auswertet, gering. Die gesamte Einrichtung zur elektrischen Ölfüllstandsüberwachung mit der nachgeschalteten Auswertungsschaltungsanordnung mit Stromquelle läßt sich somit kostengünstig herstellen. Damit werden weitreichende Anwendungsmöglichkeiten auch bei weniger aufwendigen Fahrzeugen erschlossen, deren Betriebssicherheit somit erhöht wird.

In einer zweckmäßigen Ausführungsform besteht das Plättchen, an dem das temperaturabhängige Widerstandselement angebracht ist, aus Metall hoher Wärmeleitfähigkeit, insbesondere Bronze.

Über das Metall wird ein großer Teil der mit dem temperaturabhängigen Widerstandselement erzeugten Wärme an das umgebende Öl in einge-

tauchtem Zustand des Widerstandselements ab-geleitet. Es genügt dabei eine so große wirksame Oberfläche des aus dem Metall bestenden Plättchens, die sich noch leicht in dem Hohlraum des Ölmeßstabs unterbringen läßt. Bei dem Einbau wird darauf geachtet, daß das metallische Plättchen hoher Wärmeleitfähigkeit nicht unmittelbar mit dem Ölmeßstab in eine gut wärmeleitende Verbindung gelangt.

Besonders vorteilhaft ist die Ausbildung des Plättchens, an dem das Widerstandselement angebracht ist, aus Keramik, welches ebenfalls gut wärmeleitend ist. Das Keramikplättchen hat darüber hinaus den Vorteil, daß es elektrisch isolierend ist und sich als Substrat (Träger) für die Zuleitungen zu dem Widerstandselement eignet.

Die Zuleitungen werden vorteilhaft aus Konstantan gefertigt, welches den Meßeffekt praktisch nicht verfälscht.

Zum Einbau des Plättchens in den Hohlraum eines Ölmeßstabs hat sich eine rechteckige Form des Plättchens als besonders geeignet erwiesen. Damit kann das Plättchen trotz der beschränkten Einbaubreite eine genügende Oberfläche zur Wärmeabgabe an das Öl im eingetauchten Zustand aufweisen.

Als besonders vorteilhafte Dimensionierung des rechteckförmigen Plättchens hat sich eine Breite von ca. 3 mm und eine Höhe von etwa 9 mm herausgestellt. Dabei ist das Plättchen, wenn es aus Metall gefertigt ist, vorteilhaft 0,1 mm dick ; bei der Ausführung aus Keramik 0,3 mm. Es wird somit ein gutes Verhältnis zwischen der wärmeübertragenden Oberfläche des Plättchens und der Wärmekapazität des Plättchens erreicht.

Die Erfindung wird im folgenden anhand einer Zeichnung mit drei Figuren erläutert. Es zeigen :

Fig. 1 eine erste Ausführungsform des an dem Plättchen angebrachten Widerstandselements mit Zuleitungen in einer Seitenansicht,

Fig. 2 eine zweite Ausführungsform des Widerstandselements auf einem Plättchen, ebenfalls mit Zuleitungen, in einer Seitenansicht und

Fig. 3 einen Längsschnitt durch ein Ende eines Ölmeßstabs, in dem unter anderem ein temperaturabhängiges Widerstandselement mit Plättchen zur Ölfüllstandsüberwachung untergebracht ist.

Die Plättchen und die Widerstandselemente sind in der Zeichnung vergrößert dargestellt.

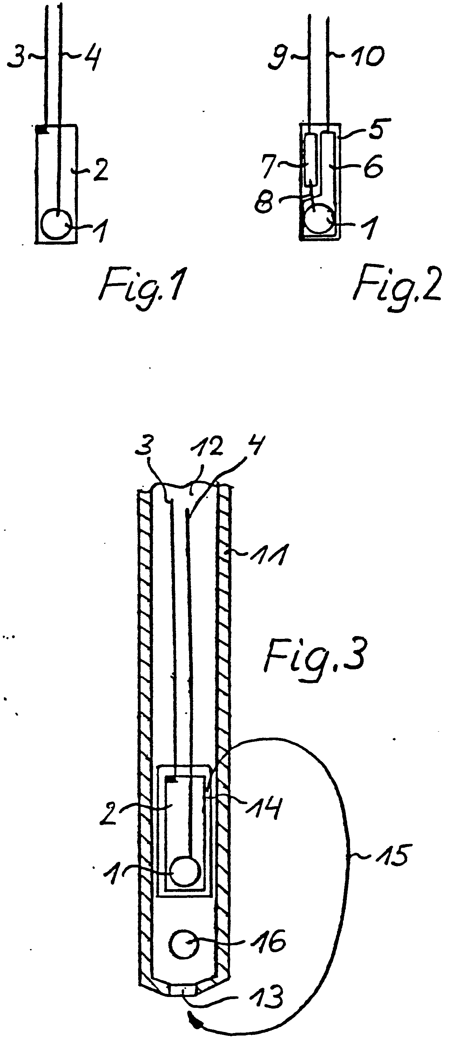

In der Zeichnung ist mit 1 ein elektrisches Widerstandselement mit positiven Temperaturkoeffizienten (PTC) bezeichnet, welches bei beiden Ausführungsformen nach den Fig. 1 und 2 eingesetzt wird.

In der ersten Ausführungsform nach Fig. 1 ist das Widerstandselement auf einem aus Bronze bestehenden Plättchen 2 wärmeleitend fest angebracht.

Zwei Zuleitungen 3, 4 zu dem Widerstandselement bestehen aus Konstantandraht. Die Zuleitung 3 ist an dem Bronzeplättchen kontaktiert, welches wiederum eine elektrische Verbindung zu einem Anschlußpunkt des Widerstandselements 1 herstellt.

Die zweite Ausführungsform nach Fig. 2 unterscheidet sich von derjenigen nach Fig. 1 zunächst dadurch, daß das Plättchen 5 aus Keramik besteht. Das Keramikplättchen dient nicht nur zur festen und gut wärmeleitenden Anbringung des Widerstandselements 1, sondern auch als Substrat für zwei Leiterbahnen 6 und 7, die als Teil der Zuleitungen zu dem Widerstandselement dienen.

Während die Leiterbahn 6 auf der dem Betrachter zugewandten Seite des in Fig. 2 dargestellten Plättchens mit dem Widerstandselement 1 direkt kontaktiert ist, erfolgt die Kontaktierung der Leiterbahn 7 über eine elektrische Brücke 8. Mit den Leiterbahnen 6, 7 sind Konstantandrähte 9, 10 zur weiteren elektrischen Verbindung des Widerstandselements mit einer nicht dargestellten Auswertungsschaltung kontaktiert.

Aus Fig. 3 geht hervor, wie ein unteres Ende eines Ölmeßstabs 11 mit einem Hohlraum 12 ausgeformt ist, welcher in eine untere Öffnung 13 übergeht. Außerdem ist der Ölmeßstab mit einem seitlichen Fenster 14 durchbrochen. Durch die untere Öffnung 13 und das Fenster 14 kann eine Ölzirkulation erfolgen, die mit der Linie 15 angedeutet ist.

In dem Hohlraum des Ölmeßstabs, und zwar im Bereich des Fensters 14 ist ein Widerstandselement 1 mit einem Plättchen (Träger) 2 aus Bronze bzw. 5 aus Keramik angeordnet, je nach dem ob die erste oder zweite Ausführungsform eingesetzt wird. Die Zuleitungen 3, 4 - im Falle der zweiten Ausführungsform 9, 10 - sind aus dem Ölmeßstab zu einer nicht dargestellten Auswertungsschaltungsanordnung mit Stromquelle herausgeführt.

In dem Hohlraum des Ölmeßstabs ist noch ein weiteres temperaturabhängiges Widerstandselement 16 angeordnet, welches einen negativen Temperaturkoeffizienten (NTC) aufweisen kann und insbesondere zur Öltemperaturmessung eingesetzt wird. Die Anschlüsse des zweiten Widerstandselements 16 sind nicht dargestellt.

Wenn das Plättchen 2 mit dem Widerstandselement in umgebendes - in Fig. 3 nicht gezeigtes - Öl eintaucht, wird die in dem Widerstandselement erzeugte Wärme über die Plättchenoberfläche weitgehend an das Öl abgegeben und die Temperatur des Widerstandselements wird relativ niedrig gehalten. Liegt andererseits das Widerstandselement 1 mit dem Plättchen 2 in dem Hohlraum 12 frei in Luft, so wird nur wenig Wärme von dem Widerstandselement und dem Plättchen an die Umgebung abgegeben und das Widerstandselement wird auf eine relativ hohe Temperatur durch den durch die Zuleitungen 3, 4 fließenden Strom erwärmt. Dabei erfolgt allenfalls nur eine geringe Wärmeableitung über die Zuleitungen 3, 4 und praktisch keine Wärmeableitung über den Ölmeßstab 11. Mit der nicht dargestellten Auswertungsschaltungsanordnung, die an die Zuleitungen 3, 4 anzuschließen ist, kann daher ein stark unter-schiedlicher Spannungsabfall an dem Wider-standselement festgestellt werden, je nach dem, ob das Widerstandselement mit dem Plättchen sich in eingetauchtem oder ausgetauchtem Zustand befindet.

## Patentansprüche

1. Einrichtung zur elektrischen Ölfüllstandsüberwachung, insbesondere in Kraftfahrzeug-Verbrennungsmotoren, mit einem Ölmeßstab (11), welcher einen eine Ölzirkulation ermöglichenden Hohlraum (12) aufweist, in welchem ein temperaturabhängiges Widerstandselement (1) angeordnet ist, das Zuleitungen (3, 4) zum Anschluß an eine Auswertungsschaltungsanordnung mit Stromquelle aufweist, dadurch gekennzeichnet, daß das Widerstandselement (1) an einem in den Hohlraum (12) des Ölmeßstabes (11) passenden Plättchen (2 bzw. 5) aus einem Material hoher Wärmeleitfähigkeit unter Bildung einer gut wärmeleitenden Verbindung angebracht ist und daß die Zuleitungen (3, 4 bzw. 9, 10) aus einem elektrischen Leiter schlechter Wärmeleitfähigkeit bestehen.

2. Einrichtung nach Anspruch 1, gekennzeichnet durch ein aus Metall hoher Warmeleitfähigkeit, insbesondere Bronze, bestehendes Plättchen (2).

3. Einrichtung nach Anspruch 1, gekennzeichnet durch ein aus Keramik bestehendes Plättchen (5).

4. Einrichtung nach einem der Ansprüche 1-3, dadurch gekennzeichnet, daß das Plättchen (2 bzw. 5) rechteckförmig ausgebildet ist.

5. Einrichtung nach Anspruch 4, dadurch gekennzeichnet, daß das rechteckförmige Plättchen (2 bzw. 5) etwa 3 mm breit und 9 mm hoch ist.

6. Einrichtung nach den Ansprüchen 1-5, gekennzeichnet durch Zuleitungen (3, 4 bzw. 9, 10) aus Konstantandraht.

7. Einrichtung nach Anspruch 3, dadurch gekennzeichnet, daß das aus Keramik bestehende Plättchen (5) zugleich als Substrat für Leiterbahnen (6, 7) dient.

## Claims

1. Device for electrical oil level monitoring, particularly in motor vehicle internal combustion engines, comprising a dipstick (11) having a cavity (12) which permits the circulation of oil and in which is disposed a temperature dependent resistance element (1) provided with supply leads (3, 4) for connection to an evaluation circuit arrangement having a current supply, characterized in that the resistance element (1) is mounted on a wafer (2 or 5), which fits into the cavity (12) in the dipstick (11) and is made of a material having high thermal conductivity, making a good heat conducting connection thereto, and that the supply leads (3, 4 or 9, 10) consist of an electrical conductor having poor thermal conductivity.

2. Device according to Claim 1, characterized by a wafer (2) consisting of a metal having high thermal conductivity, particularly bronze.

3. Device according to Claim 1, characterized by a wafer (5) consisting of ceramic material.

4. Device according to one of Claims 1 to 3, characterized in that the wafer (2 or 5) is rectangular in shape.

5. Device according to Claim 4, characterized in that the rectangular wafer (2 or 5) has a width of about 3 millimetres and a height of about 9 millimetres.

6. Device according to Claims 1 to 5, characterized by supply leads (3, 4 or 9, 10) of constantan wire.

7. Device according to Claim 3, characterized in that the wafer (5) of ceramic material serves at the same time as substrate for conductor tracks (6, 7).

## Revendications

1. Dispositif destiné à la surveillance électrique du niveau d'huile, en particulier dans les moteurs à combustion interne de véhicules automobiles, ce dispositif comportant une jauge (11) à huile, qui présente un espace creux (12) rendant possible une circulation d'huile et dans lequel est disposé un élément résistif (1), dont la résistance dépend de la température, qui présente des lignes de conducteurs (3, 4) d'alimentation destinées au raccordement à un dispositif à circuit d'évaluation comportant une source de courant, dispositif caractérisé en ce que l'élément résistif (1) est monté sur une plaquette (2 ou 5) qui est adaptée à l'espace creux (12) de la jauge (11) à huile, et est réalisée en un matériau présentant une conductibilité thermique élevée, en formant une liaison bonne conductrice de la chaleur, et en ce que les lignes (3, 4 ou 9, 10) d'alimentation sont constituées par un conducteur électrique mauvais conducteur de la chaleur.

2. Dispositif selon la revendication 1, caractérisé en ce qu'il comporte une plaquette (2) réalisée en un métal présentant une conductibilité thermique élevée, en particulier en bronze.

3. Dispositif selon la revendication 1, caractérisé en ce qu'il comporte une plaquette (5) réalisée en matériau céramique.

4. Dispositif selon une des revendications 1 à 3, caractérisé en ce que la plaquette (2 ou 5) est de forme rectangulaire.

5. Dispositif selon la revendication 4, caractérisé en ce que la plaquette rectangulaire (2, ou 5) a une largeur d'environ 3 mm et une hauteur d'environ 9 mm.

6. Dispositif selon les revendications 1 à 5, caractérisé en ce qu'il comporte des conducteurs (3, 4, ou 9, 10) d'alimentation qui sont en fil de Constantan.

7. Dispositif selon la revendication 3, caractérisé en ce que la plaquette (5) réalisée en un matériau céramique sert en même temps de substrat pour des pistes de conductrices (6, 7).

Fig.1

Fig.2

Fig.3